# FASCICULE DE BREVET EUROPEEN

(11) **EP 2 442 075 B1**
(45) Date de publication et mention de la délivrance du brevet: **09.09.2015**
(21) Numéro de dépôt: 12150170.4
(22) Date de dépôt: 10.11.2009
(51) Int. Cl.: G01C 23/00, G05D 1/00

(54) **Instrument d'aide à la navigation pour aéronef**
Navigationshilfsinstrument für Luftfahrzeug
Assisted-navigation instrument for an aircraft

(30) Priorité: 25.11.2008 EP 08169905
(43) Date de publication de la demande: 18.04.2012
(62) Demande divisionnaire de: 09748354.9
(73) Titulaire: Omega SA, 2500 Biel/ Bienne 4 (CH)
(72) Inventeur: Nicollier, Claude, 1015 Lausanne (CH); Fleury, Emmanuel, 2740 Moutier (CH); Galli, Reto, 3053 Münchenbuchsee (CH)
(74) Mandataire: Ravenel, Thierry Gérard Louis

(56) Documents cités:
- WO-A-95/15499
- WO-A-2007/005658
- GB-A- 2 127 656
- US-A- 4 663 627
- US-A- 5 359 326
- US-A1- 2006 212 182

## Description

La présente invention concerne un instrument d'aide à la navigation pour un aéronef. Plus précisément, l'invention concerne un instrument pour aider le pilote d'un aéronef durant les phases d'approche et d'atterrissage.

Le projet baptisé Solar Impulse a pour but de faire voler un avion mû uniquement grâce à l'énergie solaire captée par une multitude de cellules photoélectriques réparties sur toute la surface de l'appareil. Pour relever ce défi, l'appareil devra être très léger et présenter une grande envergure, typiquement de l'ordre de 61 mètres, soit une envergure comparable à celle d'un Airbus A-340 qui pèse quant à lui plusieurs centaines de tonnes.

Inutile de dire qu'il existe de grandes différences de pilotage entre ces deux types d'appareils. Sans entrer dans les détails, il faut noter que les phases d'approche et d'atterrissage sont fondamentalement différentes selon que l'on pilote l'un ou l'autre type d'appareil. Un avion grand et lourd, fortement motorisé, a des contraintes nettement moindres lors de son approche et de la phase finale de l'atterrissage. De fait, le vent de travers, même relativement fort, ne pose pas de gros problèmes de stabilité, tout comme l'angle d'approche peut facilement être corrigé grâce à la faculté qu'ont les pilotes de remettre les gaz et de négocier un léger virage. Cela étant, même si la technique et la puissance d'un gros porteur offrent une marge de sécurité relativement importante, l'approche finale et l'atterrissage n'en restent pas moins des phases de vol délicates requérant toute l'attention des pilotes qui doivent gérer un grand nombre de paramètres dans un faible laps de temps.

Le pilote de Solar Impulse, tout en devant gérer les mêmes paramètres que dans un avion classique, n'aura pas à sa disposition une réserve de puissance lui permettant d'opérer facilement une correction de trajectoire, notamment dans les derniers hectomètres précédent le touché de la piste. Or, à cause de son poids extrêmement réduit et de sa grande envergure, l'appareil sera très sensible au vent latéral et n'aura qu'une possibilité très réduite de manoeuvre lors de l'approche finale. Il fallait dont trouver un moyen pour donner au pilote des informations relatives à son angle d'approche et à l'inclinaison des ailes de son appareil.

Au sujet de l'angle d'approche, on peut dire que lorsqu'un avion veut atterrir, il se dirige normalement vers le seuil de la piste en ligne droite. Mais il est bien sûr sensible au vent de travers qui peut le faire dévier de sa trajectoire. C'est ainsi qu'en cas de vent de travers, le pilote, s'il regarde droit devant lui, constatera que la piste est légèrement soit sur la gauche, soit sur la droite par rapport au nez de son appareil. Grâce à la puissance de ses moteurs, le pilote d'un avion classique peut corriger l'angle entre la trajectoire rectiligne et le seuil de la piste.

Pour un aéronef du type Solar Impulse, le pilote ne dispose pas de réserve de puissance et il doit donc préparer l'approche en respectant au mieux la ligne droite ou alors en anticipant dès que possible la dérive de son appareil due au vent de travers. Pour cela, il faut que le pilote, par ailleurs fort occupé aux autres manoeuvres d'approche, puisse facilement se rendre compte de la correction qu'il doit apporter à sa trajectoire pour aborder correctement le seuil de piste. De plus, il doit aussi pouvoir savoir si son aile est parfaitement horizontale car, comme elle est très grande, elle risque de toucher la piste au moment de l'atterrissage si elle est trop inclinée d'un côté ou de l'autre. Or, il faut se rendre compte qu'avec une aile de 61 mètres d'envergure, il est pratiquement impossible pour le pilote de visualiser une inclinaison des ailes d'un ou deux mètres par rapport à l'horizontale parfaite.

Le document US 4,663,627 décrit un instrument d'aide à la navigation pour le pilote d'un aéronef comprenant deux dispositifs d'affichage gauche et droit s'étendant horizontalement et à distance l'un de l'autre et ayant pour fonction d'indiquer l'angle d'inclinaison des ailes de l'aéronef par rapport à l'horizontale respectivement du côté gauche ou du côté droit dudit aéronef.

La présente invention a pour but de répondre aux besoins mentionnés ci-dessus en procurant un instrument d'aide à la navigation qui permette au pilote d'un aéronef d'apprécier d'un simple coup d'oeil l'angle d'inclinaison des ailes de son appareil.

A cet effet, la présente invention concerne un instrument d'aide à la navigation pour le pilote d'un aéronef selon la revendication 1 annexée.

Selon un mode particulier de réalisation de l'invention, les deux dispositifs d'affichage gauche et droit sont réalisés au moyen d'une rangée de diodes électroluminescentes chacun, une diode de l'une des rangées de diodes gauche ou droite s'éclairant pour indiquer de quel côté penche l'avion et de combien de degrés ses ailes sont inclinées par rapport à l'horizontale. La résolution de l'affichage fourni par les deux rangées de diodes sera préférentiellement de ± 1°, une diode de l'une quelconque des deux rangées de diodes indiquant une inclinaison de l'aile de l'aéronef d'un degré. Avantageusement, les deux dispositifs d'affichage verticaux gauche et droit fournissent une indication sur l'inclinaison des ailes comprise entre 0° et 5°.

D'autres caractéristiques et avantages de la présente invention ressortiront plus clairement de la description détaillée qui suit d'un exemple de réalisation de l'instrument d'aide à la navigation selon l'invention, cet exemple étant donné à titre purement illustratif et non limitatif seulement en liaison avec le dessin annexé sur lequel :
- la figure 1 est une vue en perspective d'un aéronef équipé de l'instrument d'aide à la navigation selon l'invention ;
- la figure 2 est une vue schématique de l'instrument d'aide à la navigation comprenant une rangée horizontale de diodes électroluminescentes pour l'indication d'un écart entre l'axe longitudinal de l'aéronef et la composante horizontale du vecteur vitesse de cet aéronef ainsi que deux rangées verticales de diodes électroluminescentes pour l'indication de l'inclinaison des ailes de l'aéronef par rapport à l'horizontale du côté gauche ou droit dudit aéronef, et
- la figure 3 est une vue analogue à celle de la figure 2, les indicateurs à diodes électroluminescentes étant remplacés par des cellules d'affichage à cristaux liquides.

Le pilote de l'appareil Solar Impulse devra maintenir l'angle d'inclinaison de ses ailes proche de zéro en palier et très faible (typiquement inférieur à 5°) dans les virages. Un tableau de bord classique ne fournit pas d'informations précises concernant l'angle d'inclinaison pour réaliser de manière appropriée toutes les phases de vol. Il a donc été jugé nécessaire de procurer un instrument fournissant un affichage de ces paramètres facile à lire, en particulier une indication précise de l'angle d'inclinaison au voisinage de zéro degré, pour assister le pilote durant l'approche finale d'atterrissage.

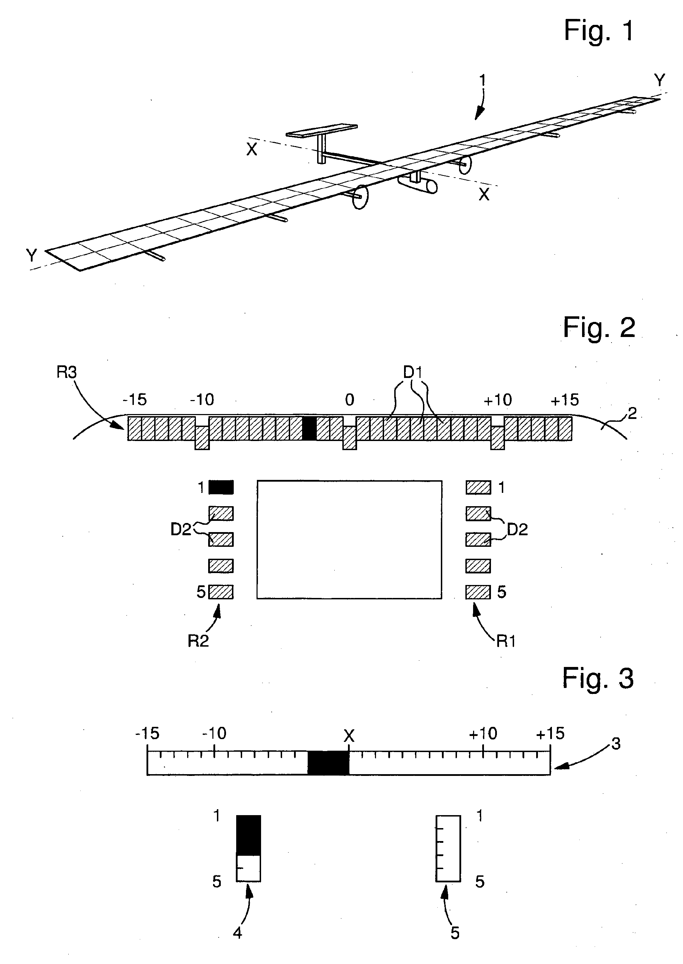

On désignera par (Φ) l'angle d'inclinaison, c'est-à-dire l'angle entre l'axe transversal (Y) de l'avion 1 (figure 1) et le plan horizontal. Φ est positif lorsque l'appareil s'incline vers la droite. Par ailleurs, on désignera par (β) l'angle de dérapage, autrement dit l'angle entre l'axe longitudinal (X) de l'appareil et la composante horizontale du vecteur vitesse de l'air. β est positif du côté droit de l'axe longitudinal X de l'appareil. Enfin, on désignera par (Ω) l'angle de dérive, c'est-à-dire l'angle entre la composante horizontale du vecteur vitesse de l'air et la piste au sol. Ω est positif à la droite du vecteur vitesse de l'air.

La fonction principale de l'instrument d'aide à la navigation pour aéronef selon l'invention est de procurer une vue nette de l'angle d'inclinaison Φ de l'appareil avec une précision d'un degré pour les cinq premiers degrés d'inclinaison positive ou négative. Au-delà de 5 degrés, l'angle d'inclinaison n'a plus besoin d'être indiqué par l'instrument selon l'invention étant donné qu'il devient appréciable avec une précision suffisante grâce aux instruments du tableau de bord classique. Une autre fonction de l'instrument d'aide à la navigation pour aéronef est de permettre au pilote de contrôler et de corriger la direction de vol par rapport au sol, autrement dit l'angle résultant de la somme de l'angle de dérapage β et de l'angle de dérive Ω. On n'affichera que la composante horizontale du vecteur vitesse, ce qui permettra au pilote d'être informé de sa direction de vol azimutale, mais pas en élévation. Enfin, l'instrument selon l'invention doit pouvoir avertir le pilote lorsque l'angle d'inclinaison Φ atteint 6° (cette valeur peut être ajustée en fonction des besoins). Cette alarme doit être visuelle et également sensorielle. A cet effet, l'alarme se produira également dans les manchons vibreurs de la combinaison de vol du pilote. En d'autres termes, si l'aile penche trop à droite, le manchon droit va vibrer, indiquant au pilote qu'il doit corriger l'inclinaison de l'aile sur la gauche.

Le pilote doit pouvoir être informé de tous les paramètres mentionnés ci-dessus (angle d'inclinaison et direction de vol) de manière claire et sans source d'erreur possible, et ce de jour comme de nuit. Un dimensionnement approprié et un choix judicieux des couleurs et des symboles permet d'atteindre cet objectif.

L'instrument d'aide à la navigation selon l'invention est basé sur des rangées de diodes électroluminescentes de couleur disposées sur le tableau de bord. La figure 2 ci-dessous illustre l'agencement désiré.

Les rangées de diodes électroluminescentes indiquant l'angle d'inclinaison et la direction de vol sont disposées sur la partie supérieure du tableau de bord 2. Les diodes D2 dédiées à l'indication de l'angle d'inclinaison sont espacées les unes des autres par un intervalle de 5 mm. Elles sont au nombre de cinq par rangée, à savoir une diode par degré d'inclinaison.

Une indication précise de l'angle d'inclinaison est fournie par deux rangées verticales de diodes électroluminescentes droite R1 et gauche R2. Une ou plusieurs diodes, à savoir une diode par degré d'inclinaison, qui jouent le rôle de marqueur mobile en produisant une lumière bleue vive vont s'illuminer successivement pour indiquer une inclinaison du côté gauche ou du côté droit de l'aile sous l'horizon. Ainsi, si l'avion vole de manière parfaitement horizontale, aucune diode D2 ne sera allumée. Par contre, si l'aile droite de l'appareil est inclinée de 3°, trois diodes D2 de la rangée de droite R1 vont s'allumer successivement et rester allumées jusqu'à ce que le pilote ait rétabli l'assiette de l'avion par une correction d'inclinaison en sens opposé. L'angle d'inclinaison est affiché sur une plage de ± 5°. Le nombre de diodes D2 éclairées depuis le haut d'une rangée R1, R2 indique la valeur de l'angle en degrés jusqu'à 5°. Dans l'exemple représenté au dessin, la première diode en partant du haut de la rangée R2 de diodes D2 est éclairée, indiquant une inclinaison de 1° des ailes de l'avion du côté gauche.

Si l'angle d'inclinaison atteint 6° ou plus (valeur ajustable), toute la rangée de cinq diodes du côté droit ou gauche concerné va se mettre à clignoter à une fréquence de 2 Hz et le signal destiné à produire l'alarme dans le manchon vibreur de la combinaison de vol du pilote va être généré.

Les diodes D1 destinées à fournir une indication précise de la direction de vol sont disposées selon une rangée horizontale R3 disposée au dessus des deux rangées R1 et R2 de diodes D2. La précision de lecture de la direction de vol ne doit pas être inférieure à 1°. On prévoit à cet effet une diode D1 pour chaque degré de déviation de la direction de vol de l'aéronef par rapport au sol. La rangée horizontale R3 de diodes D1 présentera une couleur de fond bleue pâle duquel se détachera une diode D1 jouant le rôle de marqueur mobile en indiquant en vert brillant la direction de la composante horizontale du vecteur vitesse par rapport au sol. Pour l'indication de la direction du vecteur vitesse, la plage de mesure sera de ± 15° en considérant que les yeux du pilote sont à environ 70 cm du tableau de bord 2 et que la partie supérieure droite de ce dernier mesure 35 cm. Pour des directions de vol supérieures à 15° par rapport à l'axe longitudinal de l'appareil, l'éclairage de la diode de couleur verte restera permanent à la fin de la rangée R3 de diodes D1 du côté approprié. On peut prévoir (voir figure 2) de décaler la diode marquant le zéro de la rangée R3 de diodes D1 et les diodes marquant -10° et +10° de cette même rangée R3 de diodes D1 par exemple vers le bas pour fournir des repères visuels au pilote. Sur l'exemple représenté au dessin, on voit que la troisième diode en partant du centre de la rangée R3 de diodes D1 sur la gauche de cette dernière est éclairée, indiquant ainsi un écart de -3° de l'axe longitudinal X de l'appareil par rapport à la direction de vol rectiligne.

En vol, toutes les diodes seront sombres, à l'exception de :
- la rangée horizontale R3 de diodes D1 sera toujours illuminée selon une couleur bleue pâle, fournissant ainsi au pilote un axe latéral de référence ;
- une diode D1 de la rangée horizontale R3 de diodes indiquera en vert vif la direction de vol (si l'appareil vole de manière parfaitement rectiligne, seule la diode D1 au centre de la rangée R3 sera éclairée) ;
- les deux rangées verticales R1 et R2 de diodes D2 indiqueront par une couleur bleue vive la valeur de l'angle d'inclinaison jusqu'à 5°. Les cinq diodes D2 d'une rangée donnée clignoteront en bleu pour un angle d'inclinaison égal ou supérieur à 6°.

On prévoit deux gradateurs, l'un pour ajuster la couleur de fond bleu pâle de la rangée horizontale R3 de diodes D1, et l'autre pour régler la luminosité de l'indicateur vert plus brillant du vecteur vitesse et de l'indicateur bleu plus brillant de l'angle d'inclinaison.

On comprendra que les dispositifs d'aide à la navigation, basés sur l'utilisation de rangées de diodes électroluminescentes, pourraient être remplacés par exemple par des dispositifs d'affichage à cristaux liquides. Ainsi, on pourrait prévoir un affichage à cristaux liquides 3 de forme rectiligne allongée disposé horizontalement indiquant la direction de vol de l'aéronef par rapport au sol, c'est-à-dire l'angle que fait l'axe longitudinal dudit aéronef avec la composante horizontale du vecteur vitesse de cet aéronef. L'affichage à cristaux liquides pourrait être rétro-éclairé et être de couleur claire lorsque l'avion vole en ligne droite. Puis, l'affichage à cristaux liquides pourrait s'assombrir progressivement depuis son centre vers la gauche ou vers la droite selon que l'aéronef s'écarte de sa trajectoire rectiligne par la gauche ou par la droite. De même, on pourrait prévoir deux écrans d'affichage de forme rectiligne allongée 4 et 5 disposés verticalement indiquant l'angle d'inclinaison des ailes de l'aéronef par rapport à l'horizontale. Ces écrans pourraient être rétro-éclairés et être de couleur claire lorsque l'avion vole à l'horizontale. Puis l'un des deux écrans s'assombrirait progressivement depuis le haut selon que les ailes de l'appareil s'inclinent vers la droite ou vert la gauche.

## Revendications

1. Instrument d'aide à la navigation pour le pilote d'un aéronef comprenant deux dispositifs d'affichage gauche (R2) et droit (R1) ayant pour fonction d'indiquer l'angle d'inclinaison droit-gauche des ailes de l'aéronef par rapport à l'horizontale, cet angle d'inclinaison indiquant respectivement si les ailes sont inclinées du côté gauche ou du côté droit dudit aéronef, l'angle d'inclinaison étant positif lorsque les ailes de l'aéronef sont inclinées du côté droit, un marqueur mobile étant capable de se déplacer soit le long du dispositif d'affichage gauche (R2), soit le long du dispositif d'affichage droit (R1) pour indiquer au pilote de quel côté penche son avion, **caractérisé en ce que** les deux dispositifs d'affichage gauche (R2) et droit (R1) s'étendent verticalement par rapport au tableau de bord (2) de l'aéronef (1) et à distance l'un de l'autre, la valeur de l'inclinaison étant d'autant plus grande que le marqueur mobile est éloigné du haut du dispositif d'affichage gauche (R2) ou droit (R1) concerné, la résolution de l'angle à afficher par les deux dispositifs d'affichage (R2) et (R1) étant de ± 1° par rapport à la position dans laquelle les ailes de l'aéronef s'étendent horizontalement.

2. Instrument d'aide à la navigation selon la revendication 1, **caractérisé en ce que** les dispositifs d'affichage gauche (R2) et droit (R1) fournissent une indication relative à l'inclinaison de l'aéronef par rapport à l'horizontale comprise entre 0° et 5°.

3. Instrument d'aide à la navigation selon l'une quelconque des revendications 1 ou 2, **caractérisé en ce que** les deux dispositifs d'affichage gauche (R2) et droit (R1) comprennent chacun une rangée de diodes électroluminescentes (D2), une ou plusieurs diodes (D2) de l'une ou l'autre des rangées de diodes droite (R1) ou gauche (R2) s'illuminant pour fournir au pilote une indication de l'inclinaison des ailes de son aéronef par rapport à l'horizontale, les diodes s'allumant les unes après les autres du haut vers le bas de la rangée concernée.

4. Instrument d'aide à la navigation selon la revendication 3, **caractérisé en ce qu'**une diode (D2) de la rangée de diodes (R2) ou (R1) indique un écart d'un degré entre l'axe transversal (Y) de l'aéronef et l'horizontale.

5. Instrument d'aide à la navigation selon l'une quelconque des revendications 1 à 2, **caractérisé en ce que** chacun des dispositifs d'affichage gauche (R2) et droit (R1) est formé par une cellule d'affichage à cristaux liquides (4, 5) s'étendant verticalement et qui est à l'état clair lorsque l'aéronef vole horizontalement, le dispositif d'affichage gauche (R2) ou droit (R1) concerné s'assombrissant du haut vers le bas au fur et à mesure que l'aile de l'aéronef s'incline sous l'horizon du côté correspondant.

6. Instrument d'aide à la navigation selon l'une quelconque des revendications 1 à 5, **caractérisé en ce qu'**il génère une alarme dans la combinaison de vol du pilote lorsque l'inclinaison de l'aile de l'aéronef par rapport à l'horizontale atteint une valeur prédéterminée.

7. Instrument d'aide à la navigation selon la revendication 6, **caractérisé en ce que** l'alarme est déclenchée lorsque l'inclinaison de l'aile est supérieure ou égale à 6°.

## Patentansprüche

1. Navigationsunterstützungsinstrument für den Piloten eines Flugzeugs, das zwei Anzeigevorrichtungen, eine linke (R2) und eine rechte (R1), aufweist, die die Funktion haben, den Rechts/Links-Neigungswinkel der Flügel des Flugzeugs in Bezug auf die Horizontale anzuzeigen, wobei dieser Neigungswinkel angibt, ob die Flügel zur linken Seite oder zur rechten Seite des Flugzeugs geneigt sind, wobei der Neigungswinkel positiv ist, wenn die Flügel des Flugzeugs zur rechten Seite geneigt sind, wobei sich ein beweglicher Markierer längs der linken Anzeigevorrichtung (R2) oder längs der rechten Anzeigevorrichtung (R1) bewegen kann, um dem Piloten anzugeben, nach welcher Seite sich sein Flugzeug neigt, **dadurch gekennzeichnet, dass** sich die linke (R2) und die rechte (R1) Anzeigevorrichtung vertikal in Bezug auf die Armaturentafel (2) des Flugzeugs (1) und in einem gegenseitigen Abstand erstrecken, wobei der Wert der Neigung umso größer ist, je weiter der bewegliche Markierer von der Oberseite der betreffenden linken (R2) oder rechten (R1) Anzeigevorrichtung entfernt ist, wobei die Winkelauflösung, die von den zwei Anzeigevorrichtungen (R2) und (R1) anzuzeigen ist, ±1° in Bezug auf die Position ist, in der sich die Flügel des Flugzeugs horizontal erstrecken.

2. Navigationsunterstützungsinstrument nach Anspruch 1, **dadurch gekennzeichnet, dass** die linke (R2) und die rechte (R1) Anzeigevorrichtung eine Angabe bezüglich der Neigung des Flugzeugs in Bezug auf die Horizontale, die im Bereich von 0° bis 5° liegt, liefern.

3. Navigationsunterstützungsinstrument nach einem der Ansprüche 1 oder 2, **dadurch gekennzeichnet, dass** die linke (R2) und die rechte (R1) Anzeigevorrichtung jeweils eine Leuchtdiodenreihe (D2) aufweisen, wobei eine oder mehrere Dioden (D2) der rechten (R1) oder der linken (R2) Diodenreihe leuchten, um dem Piloten eine Angabe der Neigung der Flügel seines Flugzeugs in Bezug auf die Horizontale anzugeben, wobei die Dioden der betreffenden Reihe nacheinander von oben nach unten erleuchtet werden.

4. Navigationsunterstützungsinstrument nach Anspruch 3, **dadurch gekennzeichnet, dass** eine Diode (D2) der Diodenreihe (R2) oder (R1) einen Abstand von einem Grad zwischen der transversalen Achse (Y) des Flugzeugs und der Horizontalen angibt.

5. Navigationsunterstützungsinstrument nach einem der Ansprüche 1 bis 2, **dadurch gekennzeichnet, dass** die linke (R2) und die rechte (R1) Anzeigevorrichtung jeweils durch eine Flüssigkristallanzeigezelle (4, 5) gebildet sind, die sich vertikal erstreckt und die in einem hellen Zustand ist, wenn das Flugzeug horizontal fliegt, wobei sich die betreffende linke (R2) oder rechte (R1) Anzeigevorrichtung von oben nach unten in dem Maß verdunkelt, in dem sich der Flügel des Flugzeugs unter den Horizont der entsprechenden Seite neigt.

6. Navigationsunterstützungsinstrument nach einem der Ansprüche 1 bis 5, **dadurch gekennzeichnet, dass** es einen Alarm im Fliegeranzug des Piloten erzeugt, wenn die Neigung des Flügels des Flugzeugs in Bezug auf die Horizontale einen vorgegebenen Wert erreicht.

7. Navigationsunterstützungsinstrument nach Anspruch 6, **dadurch gekennzeichnet, dass** der Alarm ausgelöst wird, wenn die Neigung des Flügels größer oder gleich 6° ist.

## Claims

1. Navigation aid instrument for an aircraft pilot including two left (R2) and right (R1) display devices having the function of indicating the left-right angle of inclination of the aircraft wings relative to the horizontal, said angle of inclination indicating respectively whether the wings are inclined on the left side or right side of said aircraft, wherein the angle of inclination is positive when the aircraft wings are inclined on the right side, a mobile marker being able to move either along the left display device (R2) or along the right display device (R1) to indicate to the pilot on which side the aeroplane is inclined, **characterized in that** the two left (R2) and right (R1) display devices extend vertically relative to the instrument panel (2) of the aircraft (1) and at a distance from each other, the value of the inclination being larger the further the mobile marker is away from the top of the left (R2) or right (R1) display device concerned, and wherein the resolution of the angle to be displayed by the two display devices (R2) and (R1) is ± 1° relative to the position in which the aircraft wings extend horizontally.

2. Navigation aid instrument according to claim 1, **characterized in that** the left (R2) and right (R1) display devices supply an indication as to the inclination of the aircraft relative to the horizontal comprised between 0° and 5°.

3. Navigation aid instrument according to any of claims 1 or 2, **characterized in that** the two left (R2) and right (R1) display devices each include a row of light emitting diodes (D2), wherein one or several diodes (D2) in one or other of the right (R1) or left (R2) diode rows light up to provide the pilot with an indication of the inclination of the aircraft wings relative to the horizontal, the diodes lighting up one after the other from the top to the bottom of the row concerned.

4. Navigation aid instrument according to claim 3, **characterized in that** one diode (D2) in the diode row (R2) or (R1) indicates a difference of one degree between the transverse axis (Y) of the aircraft and the horizontal.

5. Navigation aid instrument according to any of claims 1 or 2, **characterized in that** each of the left (R2) and right (R1) display devices is formed by a liquid crystal display cell (4, 5) that extends vertically and which is in a light coloured state when the aircraft is flying horizontally, wherein the left (R2) or right (R1) display device concerned gradually gets darker from the top to the bottom as the aircraft wing inclines under the horizon on the corresponding side.

6. Navigation aid instrument according to any of claims 1 to 5, **characterized in that** it generates an alarm in the pilot's flight suit when the inclination of the aircraft wing relative to the horizontal reaches a predetermined value.

7. Navigation aid instrument according to claim 6, **characterized in that** the alarm is triggered when the inclination of the wing is greater than or equal to 6°.
